# FASCICULE DE BREVET EUROPEEN

(11) **EP 3 643 174 B1**
(45) Date de publication et mention de la délivrance du brevet: **09.07.2025**
(21) Numéro de dépôt: 19200612.0
(22) Date de dépôt: 30.09.2019
(51) Int. Cl.: A01M 29/34, A01G 13/10, A01M 1/10

(54) **PIÈGE À CHENILLES ET SON DISPOSITIF D'ENTONNOIR**
RAUPENFALLE UND IHRE TRICHTERVORRICHTUNG
CATERPILLAR TRAP AND ITS FUNNEL DEVICE

(30) Priorité: 26.10.2018 FR 1871314
(43) Date de publication de la demande: 29.04.2020
(73) Titulaire: LMV - La Mesange Verte, 66670 Bages (FR)
(72) Inventeur: AURICHE, Christian, 66670 BAGES (FR)
(74) Mandataire: Rhein, Alain

(56) Documents cités:
- EP-A1- 2 796 040
- FR-A1- 2 691 045
- FR-A1- 2 946 834

## Description

La présente invention entre dans le domaine des pièges à chenilles, et plus particulièrement des pièges à chenilles processionnaires de pin.

Au cours de leur cycle d'évolution, les chenilles processionnaires passent par cinq stades larvaires. A la fin du cinquième de ces stades, les chenilles processionnaires sont urticantes et descendent de l'arbre, conduites par une chenille de tête. Cela correspond à la procession de nymphoses. Ces dernières vont s'enfouir dans le sol, à quelques centimètres sous terre.

L'appareil urticant de la chenille processionnaire provoque des risques sanitaires pour l'homme et les animaux. En effet, leurs poils contiennent une substance urticante et allergisante qui provoque de vives démangeaisons, irritations pouvant parfois s'accompagner d'atteintes oculaires, pulmonaires, voire des réactions allergiques plus graves. Les processions peuvent se déplacer à des distances importantes de l'arbre. C'est pourquoi, il est nécessaire d'éviter la propagation de ces chenilles urticantes.

Il existe plusieurs méthodes de capture et/ou d'élimination des chenilles processionnaires.

Plus particulièrement, la demanderesse a conçu un premier piège à chenilles décrit par le document FR 2 946 834. Ce document décrit un piège à chenilles, notamment pour les chenilles processionnaires du pin. Ce piège à chenilles permet de détourner les chenilles du tronc d'arbre, vers un sac de récolte, rempli de terre.

Ce piège à chenilles comporte un collier consistant en une bande de matériau souple ou semi-rigide, comprenant sur son côté intérieur et en partie sur sa longueur un profilé en matériau souple. Par enroulement du collier autour d'un tronc d'arbre ce profilé en matériau souple épouse la forme de ce dernier en formant entre celui-ci et le collier un plancher de cheminement des chenilles. A noter que le collier comporte des moyens de serrage et de fixation permettant cet enroulement, mais aussi son serrage autour du tronc d'arbre, de manière entretoisée par le plancher de cheminement.

Au cours de leur descente vers le sol, les chenilles rencontrent l'obstacle que constitue ce plancher de cheminement. Elles ont donc tendance à poursuivre leur progression en tournant autour du tronc d'arbre le long de ce plancher de cheminement, les amenant vers un trou de descente qu'elles sont censées emprunter pour gagner un sac de récolte.

Cependant, cette configuration permet à ces chenilles de continuer leur progression autour du tronc sans nécessairement regagner le trou de descente prévu à cet effet. Cela peut engendrer une accumulation de chenilles sur le profilé jusqu'au débordement du piège, entrainant la chute sur le sol de chenilles et ne permettant donc pas une bonne évacuation de celles-ci dans le sac de récolte.

De manière connue, les chenilles processionnaires du pin sont des organismes grégaires qui sécrètent un certain nombre d'hormones dont une hormone dite « hormone de trace ». Bien que l'on ne connaisse pas l'organe de sécrétion de cette hormone de trace, il a été constaté qu'elle est sécrétée et déposée par les chenilles processionnaires du pin lors de leur déplacement. Cette hormone de trace est déposée dans une trace qui peut prendre la forme d'un fil. Or, il a été observé que les chenilles processionnaires du pin qui succèdent à une première chenille processionnaire du pin, suivent la trace de la ou des précédentes chenilles processionnaires du pin.

Par ailleurs, les chenilles processionnaires du pin ont tendance à se déplacer sur le plancher de cheminement en longeant le tronc de l'arbre. Ainsi, la combinaison de ces deux comportements conduit les chenilles processionnaires du pin à tourner autour du tronc de l'arbre sur le plancher de cheminement et à contourner le trou de descente lors d'un ou de plusieurs passages. Ce phénomène peut conduire à une grande accumulation des chenilles dans le piège à chenilles voir dans des cas extrêmes à ce que les chenilles débordent du piège à chenilles. La demanderesse a observé qu'il n'était pas rare de dénombrer plus de 3000 chenilles s'accumulant dans un piège. Si l'on considère qu'une chenille possède plus d'un million de poils qui mesure chacun quelques microns, et par conséquent, l'extrême volatilité de ces poils, une telle accumulation de chenilles peut engendrer un risque sanitaire important.

Il convient donc de trouver une solution alternative de piège à chenilles processionnaires, n'engendrant pas l'agglomération de celles-ci sur le piège, c'est-à-dire qui permette le bon acheminement des chenilles vers le sac de récolte.

La présente invention a pour but de pallier les inconvénients de l'état de la technique pour résoudre les problèmes susmentionnés, en proposant un piège à chenilles, notamment pour chenilles processionnaires du pin, comportant :
- un profilé, formant un plancher de cheminement des chenilles,
- un sac de récolte des chenilles connecté au plancher de cheminement,
- un collier sous forme d'une paroi qui délimite extérieurement le plancher de cheminement, et
- des moyens de serrage et de fixation destinés à enrouler et resserrer le collier autour d'un tronc d'arbre de manière entretoisée par le plancher de cheminement,
- au moins un organe d'orientation saillant du plancher de cheminement, l'organe d'orientation étant prévu pour s'étendre entre la périphérie du tronc d'arbre et le collier ou inversement, de sorte à séparer les chenilles du tronc d'arbre et/ ou du collier,

Le piège à chenilles se caractérise en ce qu'il comporte encore un dispositif d'entonnoir dont une embouchure inférieure débouche dans le sac de récolte des chenilles et en ce qu'au moins une extrémité du plancher de cheminement est connectée avec une embouchure supérieure de ce dispositif d'entonnoir.

Au cours de leur progression autour du tronc, les chenilles entrent en contact avec le plancher de cheminement. Naturellement, celles-ci vont suivre la trajectoire du plancher de cheminement. La communication de ce dernier avec un dispositif d'entonnoir permet alors d'orienter, de guider directement les chenilles vers le sac de récolte.

Selon l'invention, l'organe d'orientation s'étend entre la périphérie du tronc d'arbre et le collier ou inversement, de sorte à séparer les chenilles du tronc d'arbre et/ou du collier orientant ainsi le cheminement des chenilles vers le sac de récolte.

Un tel organe d'orientation permet notamment d'écarter les chenilles du tronc d'arbre, de manière à éviter que les chenilles ne contournent le dispositif d'entonnoir débouchant sur le sac de récolte. Cette caractéristique permet d'assurer que les chenilles descendent vers le sac de récolte.

De manière plus spécifique, dans l'objectif d'orienter le cheminement des chenilles processionnaire, l'organe d'orientation peut s'étendre radialement ou tangentiellement depuis le collier et/ou depuis la périphérie du tronc d'arbre.

De préférence, au moins un organe d'orientation comporte une ailette qui s'étend depuis une première extrémité adjacente au tronc ou adjacente au collier, vers une seconde extrémité disposée à distance du tronc et/ou à distance du collier.

Selon un mode de réalisation particulier, le dispositif d'entonnoir comporte un flasque formant une console support à au moins un tronçon de profilé définissant une continuité du plancher de cheminement, le flasque s'étend depuis l'embouchure supérieure du dispositif d'entonnoir, en direction de son embouchure inférieure.

De manière avantageuse, cette console support comporte deux tronçons de profilé définissant la continuité du plancher de cheminement à chacune des extrémités de ce dernier. La console support s'étend depuis l'embouchure supérieure du dispositif d'entonnoir, en direction de son embouchure inférieure, symétriquement de part et d'autre d'un plan médian vertical.

De préférence, le flasque est conçu en matériau souple ou semi-rigide assurant une adaptation à la forme et aux dimensions du tronc d'arbre. Ce flasque sert de support aux tronçons de profilés qui définissent la trajectoire des chenilles le long du piège. Par conséquent, au cours de leur progression le long du tronc d'arbre, les chenilles atteignent les tronçons de profilés, où elles continuent leur progression en direction du sac de récolte.

Préférentiellement, le flasque constitue une partie du dispositif d'entonnoir, empêchant, du fait d'un état de surface lisse et non rugueux, la progression des chenilles sur celui-ci. Cette caractéristique participe à guider la descente des chenilles, de manière optimale, vers le sac de récolte.

Le parcours des chenilles processionnaires tel que décrit par l'invention permet une évacuation fluide et naturelle des chenilles vers le sac de récolte, en évitant une accumulation de celles-ci sur le plancher de cheminement.

Selon un mode de réalisation préférentiel de l'invention, des organes d'orientation sont fixées sur le flasque de manière symétrique de part et d'autre d'un plan médian vertical.

Situés de part et d'autre du dispositif de flasque, les organes d'orientation entrainent les chenilles vers le dispositif d'entonnoir. Cette configuration spécifique participe à éviter que des chenilles ne contournent le dispositif d'entonnoir quel que soit leur sens et leur direction de progression.

Préférentiellement, le piège à chenilles comporte des moyens de comptage des chenilles disposés de préférence au niveau du dispositif d'entonnoir. Contrairement aux pièges décrits par l'art antérieur où les chenilles tournent à plusieurs reprises sur le plancher de cheminement, il est possible de compter les chenilles parce qu'elles sont directement dirigées vers le sac de récolte. En effet, lorsque les chenilles tournent plusieurs fois autour du tronc, un dispositif de comptage fournirait alors des données erronées.

Selon un mode préférentiel de l'invention, à son extrémité adjacente au tronc, l'extrémité adjacente au tronc s'étend au-dessus du plancher de cheminement, alors que la seconde extrémité s'étend au-dessus de l'embouchure supérieure du dispositif d'entonnoir.

Une telle configuration permet non seulement le décollement des chenilles du tronc, mais également l'assurance du suivi de la trajectoire du plancher de cheminement. Cette configuration empêche donc tout risque de contournement du dispositif d'entonnoir.

La présente invention porte également sur un dispositif d'entonnoir d'un piège à chenilles selon l'invention.

Le dispositif d'entonnoir se caractérise en ce qu'il comporte un flasque formant une console support à deux tronçons de profilé destinés à définir respectivement une extrémité (9) d'un plancher de cheminement des chenilles, la console support s'étendant depuis une embouchure supérieure du dispositif d'entonnoir, en direction d'une embouchure inférieure, symétriquement de part et d'autre d'un plan médian vertical, le dispositif d'entonnoir comportant encore des organes d'orientation fixées sur le flasque de manière symétrique de part et d'autre dudit plan médian vertical.

Un tel dispositif est adaptable à un piège pour chenilles déjà existant. Associé à un système de collier et maintenu en position sur le tronc d'arbre, ce dispositif d'entonnoir permet le cheminement naturel des chenilles vers le sac de récolte. Amovible et économique, ce dispositif d'entonnoir est aisément montable sur un système déjà existant.

D'autres caractéristiques et avantages de l'invention ressortiront de la description détaillée qui va suivre des modes de réalisation non limitatifs de l'invention, en référence aux figures annexées, dans lesquelles :
- La figure 1 représente schématiquement une vue d'ensemble du piège à chenilles selon l'invention avec une partie A du collier représentée en transparence ;
- La figure 2 représente schématiquement une vue de face du dispositif d'entonnoir selon l'invention ;
- La figure 3 représente schématiquement une vue de dessus d'une partie d'extrémité du plancher de cheminement selon l'invention ; et
- La figure 4 représente schématiquement une vue de dessus du piège à chenilles selon l'invention.

La présente invention concerne un piège à chenilles 1, notamment pour chenilles processionnaires du pin.

Plus particulièrement, ce piège à chenilles 1 comporte un collier 2, sous forme d'une paroi. De préférence, le collier 2 est réalisé dans un matériau souple ou semi-rigide. A titre indicatif, le collier 2 peut être réalisé en matériau synthétique, à faible rugosité, telle qu'une bande en polypropylène. On choisira d'avantage un matériau lisse, de manière à éviter que les chenilles puissent progresser, notamment remonter le long du collier 2.

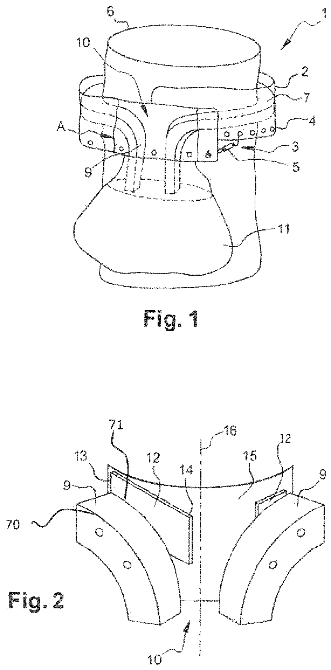

Le piège à chenilles 1 comporte des moyens de serrage et de fixation 3, notamment du collier 2. Les moyens de serrage et de fixation 3 permettent d'enrouler et de resserrer le collier 2 autour d'un tronc d'arbre 6. Tels que visibles sur la figure 1, ces moyens de serrage et de fixation 3 peuvent être composés de perçages 4 permettant le passage d'un système d'accroche 5. Avantageusement, les perçages 4 disposés de manière adéquate peuvent également assurer l'évacuation des eaux pluviales s'écoulant dans le piège à chenilles 1.

Par ailleurs, les moyens de serrage et de fixation 3 confèrent au collier 2 un côté réglable. Ce côté réglable permet à un utilisateur d'adapter la longueur du collier 2 à la croissance de l'arbre. Ainsi, lorsque l'utilisateur s'aperçoit qu'un collier 2 positionné autour du tronc d'arbre 6 présente un état d'étirement anormal, il lui suffit de desserrer les moyens de serrage et de fixation 3, d'adapter le collier à la circonférence du tronc de l'arbre 6, avant de resserrer les moyens de serrage et de fixation 3.

Comme précédemment évoqué, les moyens de fixation et de serrage 3 peuvent emprunter bien d'autres formes de réalisation, tel qu'un ensemble de sangle et boucle, à la manière d'une ceinture. D'ailleurs, ces moyens de serrage et de fixation 3 peuvent être directement solidarisés au collier 2, afin de ne former qu'une seule pièce.

Le piège à chenilles 1 comporte un profilé qui s'étend depuis un côté intérieur du collier 2 en direction du tronc d'arbre 6. Le profilé s'étend dans un plan perpendiculaire au collier 2. Au travers de son épaisseur, le profilé est prévu pour constituer une entretoise entre le tronc d'arbre 6 et le collier 2. En particulier, le profilé est défini pour former un plancher de cheminement 7 entre ce tronc d'arbre 6 et le collier 2. Le plancher de cheminement 7 s'étend latéralement entre une bordure intérieure 70 et une bordure extérieure 71. Ici, le collier 2 correspond à une paroi qui délimite extérieurement le plancher de cheminement 7.A cet effet, le côté intérieur du collier 2 est solidaire de la bordure extérieure 71 du plancher de cheminement 7. De préférence, les moyens de serrage 3 permettent de solidariser le collier 2 au plancher de cheminement 7.

Le profilé se présentera avantageusement sous forme d'un matériau souple, notamment moussé ou en caoutchouc, lui permettant d'épouser au plus près le contour d'un tronc d'arbre 6. Il est préférentiellement de section parallélépipédique rectangle.

En particulier, la bordure intérieure 71 du plancher de cheminement 7 est solidaire de la périphérie du tronc d'arbre 6.

A noter qu'accessoirement, pour parfaire l'étanchéité de passage entre le tronc d'arbre 6 et le plancher de cheminement 7, un mastic 8 peut être interposé entre les deux, au moment de la mise en place du piège à chenilles 1. Cependant, le profilé peut également comprendre une portion de jointure permettant d'épouser les stries de l'écorce du tronc de l'arbre 6. Cette portion de jointure s'étend latéralement par rapport au profilé. La portion de jointure peut être réalisée par un lamellé ou une portion en matériau de plus grande souplesse que celle du profilé.

Avantageusement, la portion de jointure permet de ne pas utiliser de mastic 8 afin de parfaire l'étanchéité de passage entre le tronc d'arbre 6 et le plancher de cheminement 7. Ici, la portion de jointure est solidaire de la bordure intérieure 71 du plancher de cheminement 7.

De préférence, le maintien en position du plancher de cheminement 7 sur le tronc d'arbre 6, peut s'effectuer au travers du serrage du collier 2. La fixation du plancher de cheminement 7 au travers du collier 2 permet de donner un caractère ajustable au profilé. Tout comme le collier 2, il est ainsi possible d'adapter par coulissement la longueur du profilé en fonction du diamètre du tronc de l'arbre et par la suite en fonction de sa croissance.

Ce maintien en position peut également, selon un autre mode de réalisation possible, s'effectuer au travers de vis de fixation dans le tronc d'arbre 6. Le maintien en position du plancher de cheminement 7 peut également être assuré au moyen de colle entre le tronc d'arbre 6 et le plancher de cheminement 7.

Comme illustré à la figure 1, le plancher de cheminement 7 comporte au moins une extrémité 9 qui communique avec une embouchure supérieure d'un dispositif d'entonnoir 10. Ici, le plancher de cheminement 9 comporte deux extrémités 9 qui communiquent avec l'embouchure supérieure d'un dispositif d'entonnoir 10. Le dispositif d'entonnoir 10 permet de connecter le plancher de cheminement 7 avec le sac de récolte 11.

De préférence, une partie A représente le collier 2 par transparence. Le piège à chenilles 1 comporte un sac de récolte 11 des chenilles 1. Dans cet exemple, le dispositif d'entonnoir 10 débouche par une embouchure inférieure, dans le sac de récolte 11 des chenilles.

Le sac de récolte 11 est avantageusement fixé au tronc d'arbre 6 au moyen d'une sangle de serrage. Cependant, le sac de récolte 11 peut également être directement rendu solidaire du piège à chenilles 1. Afin de se fondre visuellement dans la nature, le sac de récolte 11 peut être muni d'un motif écorce.

De plus, le sac de récolte 11 peut comporter sur sa partie supérieure, une ouverture d'engagement de l'embouchure inférieure du dispositif d'entonnoir 10, dans ce sac de récolte 11.

De plus, les deux extrémités 9 du plancher de cheminement 7 s'étendent symétriquement de part et d'autre d'un plan médian vertical 16. Dans cet exemple, les deux extrémités 9 s'étendent depuis l'embouchure supérieure du dispositif d'entonnoir 10, en direction de son embouchure inférieure débouchant sur le sac de récolte 11.

Par conséquent, les chenilles descendant le long du tronc d'arbre 6 rencontrent le piège à chenilles 1, dans lequel elles vont suivre la trajectoire du plancher de cheminement 7. En suivant cette trajectoire, les chenilles vont progresser vers les extrémités 9 du plancher de cheminement 7, les conduisant naturellement et directement dans le sac de récolte 11.

Comme illustré aux figures 2 à 5, le piège à chenilles 1 comporte au moins un organe d'orientation 12. Avantageusement, l'organe d'orientation 12 permet la séparation des chenilles et du tronc d'arbre 6 et/ou du collier 2. Dans cette optique, l'organe d'orientation 12 est saillant du plancher de cheminement 7. En particulier, l'organe d'orientation 12 peut s'étendre depuis la bordure intérieure 71 vers la bordure extérieure 70 du plancher de cheminement 7. Toutefois, l'organe d'orientation 12 peut également s'étendre depuis la bordure extérieure 70 vers la bordure intérieure 71 du plancher de cheminement 7.

L'organe d'orientation 12 vise à orienter le cheminement des chenilles en direction du sac de récolte 11. A cet effet, l'organe d'orientation 12 peut s'orienter selon plusieurs directions. En particulier, l'organe d'orientation 12 peut s'étendre radialement entre chaque bordure 70, 71. Selon cette configuration, l'organe d'orientation 12 peut s'étendre radialement depuis le collier 2 vers la périphérie du tronc d'arbre 6, ou inversement depuis la périphérie du tronc d'arbre 6 vers le collier 2.

Il est également possible que l'organe d'orientation 12 s'étende tangentiellement entre chaque bordure 70, 71. Selon cette configuration, l'organe d'orientation 12 s'étend tangentiellement depuis la périphérie du tronc de l'arbre ou depuis le collier.

Dans cet exemple, le piège à chenilles 1 comporte deux organes d'orientation 12. De préférence, chaque organe d'orientation 12 est formé par une ailette. Dans l'exemple illustré aux figures 2 à 5, l'ailette s'étend depuis une première extrémité 13 adjacente au tronc d'arbre 6, vers une seconde extrémité 14 disposée à distance du tronc de l'arbre 6. Ici, l'ailette s'étend de manière tangentielle depuis la périphérie du tronc de l'arbre 6. Toutefois, il est également possible que l'ailette s'étende tangentiellement depuis le collier 2. Cette configuration permet d'orienter vers le sac de récolte 11 des chenilles dont le cheminement longerait le collier 2.

Selon un mode de réalisation non illustré de l'invention, il est également possible que l'organe d'orientation 12 comporte une ailette qui s'étende de manière parallèle au collier 2 et/ou à la périphérie du tronc d'arbre 6. Cette caractéristique permet d'éviter que le cheminement des chenilles ne contourne la connexion entre le plancher de cheminement 7 et le sac de récolte 11.

Cependant, l'ailette peut également s'étendre depuis une première extrémité adjacente du collier 2 vers une seconde extrémité 14 disposée à distance du collier 2. Dans ces deux configurations, la seconde extrémité 14 se trouve libre entre le collier 2 et le tronc de l'arbre 6. Ici, la seconde extrémité 14 contribue à orienter le cheminement des chenilles sur le plancher de cheminement 7 vers le sac de récolte 11.

De manière préférentielle, à son extrémité adjacente 13 au tronc d'arbre 6, l'ailette s'étend au-dessus du plancher de cheminement 7, et à sa seconde extrémité 14 s'étendant au-dessus de l'embouchure supérieure du dispositif d'entonnoir 10. Cette ailette permet de décaler la trajectoire des chenilles du tronc d'arbre 6, en assurant leur décollement de ce dernier, et en les orientant directement vers le dispositif d'entonnoir 10.

Selon une autre caractéristique avantageuse, le dispositif d'entonnoir 10 comporte un flasque 15. Ce flasque 15 consiste en une applique venant sur un premier côté, prendre appui contre le tronc d'arbre 6. Le flasque 15 est solidaire d'un premier côté de la bordure intérieure 71 du plancher de cheminement 7. D'un second côté opposé au premier, le flasque 15 est solidaire de la bordure extérieure 70 du plancher de cheminement 7. Dans cet exemple, le flasque 15 est réalisé en matériau souple ou semi-rigide. De préférence, le flasque 15 est réalisé en matériau synthétique, à faible rugosité, telle qu'une bande en polypropylène. Un second côté du flasque 15 opposé au premier côté, forme une console support, pour au moins une partie du plancher de cheminement 7. Ici, le flasque forme une console support pour les deux d'extrémité 9 du plancher de cheminement 7.

Préférentiellement, la fixation du plancher de cheminement 7 et de l'organe d'orientation 12 s'effectue sur le flasque 15, afin d'obtenir une pièce unique. Cette pièce unique permet alors une certaine aisance de montage du piège à chenilles 1 sur le tronc d'arbre 6.

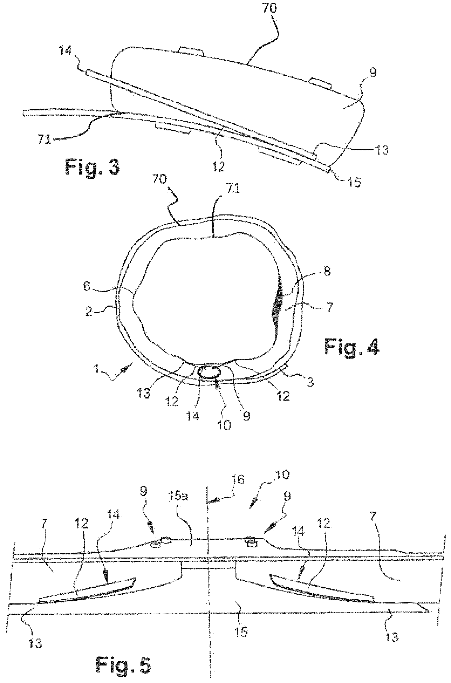

Dans l'exemple de la figure 4, deux organes d'orientation 12 sont fixées sur le flasque 15 symétriquement et de part et d'autre du plan médian vertical 16. Cette symétrie permet un écartement de la trajectoire des chenilles, quel que soit le sens et la direction de leur déplacement sur les extrémités 9 du plancher de cheminement 7.

Selon un autre exemple de réalisation de l'invention, l'organe d'orientation 12 peut également comprendre une ailette qui s'étend depuis une extrémité 13, 14 adjacente du tronc de l'arbre 6 jusqu'à une seconde extrémité 13, 14 adjacente du collier 2. Dans cette configuration, l'ailette forme une paroi s'étendant radialement entre la paroi du collier 2 et le tronc de l'arbre 6. De préférence, dans cette configuration, l'ailette est disposée au-dessus de l'embouchure supérieure du dispositif d'entonnoir 10.

Dans ce cas, l'organe d'orientation 12 relie le tronc de l'arbre 6 au collier 2. Dans cette configuration, l'organe d'orientation 12 s'oppose au cheminement des chenilles sur le plancher de cheminement 7, les obligeant à descendre vers le sac de récolte 11.

Les caractéristiques du piège à chenilles 1 selon la présente invention contribuent à diriger directement les chenilles vers le sac de récolte 11, il est alors possible de compter les chenilles. A cet effet et selon un mode de réalisation préférentiel, le piège à chenilles 1 comporte des moyens de comptage des chenilles. Ces moyens de comptage permettent l'établissement de statistiques ou encore l'évaluation du nombre de chenilles présentes dans le sac de récolte 11. Ces moyens de comptage peuvent comporter des capteurs fixés sur les parties d'extrémités 9 du plancher de cheminement 7, au niveau du flasque 15 du dispositif d'entonnoir 10. Les moyens de comptage peuvent également être utiles pour déclencher une alerte sanitaire qui viserait à alerter la population du début des processions urticantes. Il est tout à fait concevable qu'un tel dispositif d'entonnoir 10 puisse équiper un piège à chenilles selon l'état de la technique.

En ce sens, l'invention concerne également un dispositif d'entonnoir 10 comprenant le flasque 15, sur lequel vient se fixer des extrémités 9 du plancher de cheminement 7 (illustré à la figure 2). Dans cet exemple, le maintien en position de ces extrémités 9 sur le flasque 15 est assuré par des vis de serrage ou tout autre système de fixation mécanique et/ou chimique.

Le dispositif d'entonnoir 10 comporte au moins un tronçon de profilé destiné à définir une extrémité 9 d'un plancher de cheminement 7 des chenilles. De préférence, le dispositif entonnoir 10 comporte deux tronçons de profilé destinés à définir respectivement une extrémité 9 d'un plancher de cheminement 7 des chenilles.

Dans cet exemple, les extrémités 9 s'étendent symétriquement de part et d'autre d'un plan médian vertical 16, depuis l'embouchure supérieure du dispositif d'entonnoir 10, en direction de son embouchure inférieure. Ici, les extrémités 9 sont destinées à déboucher sur le sac de récolte 11.

De la même manière, le dispositif d'entonnoir est équipé d'au moins un organe d'orientation 12, et de préférence de deux organes d'orientation 12. Les deux organes d'orientation 12 s'étendent de manière symétrique selon le plan médian 16. Ici, les deux organes d'orientation 12 sont fixés entre le flasque 15 et chacune des extrémités 9 du plancher de cheminement 7.

Le dispositif d'entonnoir 10 permet une utilisation sur un piège à chenilles déjà existant. En effet, le dispositif d'entonnoir 10 est amovible, et peut se fixer sur un autre piège à chenilles, tel que celui décrit dans l'état de la technique.

Préférentiellement, le dispositif d'entonnoir 10 comporte des moyens de comptage des chenilles, tels que des capteurs. A titre indicatif, les moyens de comptage peuvent être fixés sur les extrémités 9 du plancher de cheminement 7.

## Revendications

1. Piège à chenilles (1) notamment pour chenilles processionnaires du pin, comportant :
- un profilé, formant un plancher de cheminement (7) des chenilles,
- un sac de récolte (11) des chenilles connecté au plancher de cheminement (7),
- un collier (2) sous forme d'une paroi qui délimite extérieurement le plancher de cheminement (7), et
- des moyens de serrage et de fixation (3) destinés à enrouler et resserrer le collier (2) autour d'un tronc d'arbre (6) de manière entretoisée par le plancher de cheminement (7),
- au moins un organe d'orientation (12) saillant du plancher de cheminement (7), l'organe d'orientation (12 étant prévu pour s'étendre entre la périphérie du tronc d'arbre (6) et le collier (2) ou inversement, de sorte à séparer les chenilles du tronc d'arbre (6) et/ou du collier (2),
**caractérisé en ce qu'**il comporte encore un dispositif d'entonnoir (10) dont une embouchure inférieure débouche dans le sac de récolte (11) des chenilles et **en ce qu'**au moins une extrémité (9) du plancher de cheminement (7) est connectée avec une embouchure supérieure de ce dispositif d'entonnoir (10)..

2. Piège à chenille (1) notamment pour chenilles processionnaires du pin, selon la revendication 1, que l'organe d'orientation (12) s'étend radialement ou tangentiellement depuis le collier (2) et/ou depuis la périphérie du tronc d'arbre (6).

3. Piège à chenilles (1) notamment pour chenilles processionnaires du pin, selon l'une des revendications 1 ou 2, **caractérisé en ce qu'**au moins un organe d'orientation (12) comporte une ailette qui s'étend depuis une première extrémité (13) adjacente au tronc (6) ou adjacente au collier (2), vers une seconde extrémité (14) disposée à distance du tronc (6) et/ou à distance du collier (2).

4. Piège à chenilles (1) notamment pour chenilles processionnaires du pin, selon la revendication 3, **caractérisé en ce que** l'extrémité (13) adjacente au tronc s'étend au-dessus du plancher de cheminement (7), alors que la seconde extrémité (14) s'étend au-dessus de l'embouchure supérieure du dispositif d'entonnoir (10).

5. Piège à chenilles (1) notamment pour chenilles processionnaires du pin, selon l'une des revendications 1 à 4, **caractérisé en ce qu'**il comporte un flasque (15) formant une console support à au moins un tronçon de profilé définissant une continuité du plancher de cheminement (9), le flasque (15) s'étend depuis l'embouchure supérieure du dispositif d'entonnoir (10), en direction de son embouchure inférieure.

6. Piège à chenilles (1) notamment pour chenilles processionnaires du pin, selon la revendication 5, **caractérisé en ce que** des organes d'orientation (12) sont fixées sur le flasque (15) de manière symétrique de part et d'autre d'un plan médian vertical (16).

7. Piège à chenilles (1) notamment pour chenilles processionnaires du pin, selon l'une des revendications 1 à 6, **caractérisé en ce qu'**il comporte des moyens de comptage des chenilles disposés de préférence au niveau du dispositif d'entonnoir (10).

8. Dispositif d'entonnoir (10) destiné à être associé à un piège à chenilles selon l'une des revendications 1 à 7, le dispositif d'entonnoir étant **caractérisé en ce qu'**il comporte un flasque (15) formant une console support à deux tronçons de profilé destinés à définir respectivement une extrémité (9) d'un plancher de cheminement (7) des chenilles, la console support s'étendant depuis une embouchure supérieure du dispositif d'entonnoir (10), en direction d'une embouchure inférieure, symétriquement de part et d'autre d'un plan médian vertical (16), le dispositif d'entonnoir (10) comportant encore des organes d'orientation (12) fixées sur le flasque (15) de manière symétrique de part et d'autre dudit plan médian vertical (16)..

## Patentansprüche

1. Raupenfalle (1), insbesondere für Kiefernprozessionsspinnerraupen, umfassend:
- ein Profil, das einen Boden für den Laufweg (7) der Raupen bildet,
- einen Aufnahmebeutel (11) für die Raupen, der mit dem Boden für den Laufweg (7) verbunden ist,
- eine Manschette (2) in Form einer Wand, die den Boden für den Laufweg (7) nach außen begrenzt, und
- Klemm- und Befestigungsmittel (3) zum Umwickeln und Festziehen der Manschette (2) um einen Baumstamm (6) in einer Weise, die durch den Boden für den Laufweg (7) abgestützt wird,
- mindestens ein vom Boden für den Laufweg (7) abstehendes Orientierungselement (12), wobei das Orientierungselement (12) dazu vorgesehen ist, sich zwischen dem Umfang des Baumstamms (6) und der Manschette (2) oder umgekehrt zu erstrecken, um die Raupen vom Baumstamm (6) und/oder der Manschette (2) zu trennen,
**dadurch gekennzeichnet, dass** sie außerdem eine Trichtervorrichtung (10) umfasst, deren untere Öffnung in den Aufnahmebeutel (11) für die Raupen mündet und dass mindestens ein Ende (9) des Bodens für den Laufweg (7) mit einer oberen Öffnung dieser Trichtervorrichtung (10) verbunden ist.

2. Raupenfalle (1), insbesondere für Kiefernprozessionsspinnerraupen, nach Anspruch 1, wobei sich das Orientierungselement (12) radial oder tangential von der Manschette (2) und/oder vom Umfang des Baumstammes (6) weg erstreckt.

3. Raupenfalle (1), insbesondere für Kiefernprozessionsspinnerraupen, nach einem der Ansprüche 1 oder 2, **dadurch gekennzeichnet, dass** mindestens eine Orientierungselement (12) eine Lamelle umfasst, die sich von einem ersten Ende (13) angrenzend an den Stamm (6) oder angrenzend an die Manschette (2) zu einem zweiten Ende (14) erstreckt, das in einem Abstand vom Stamm (6) und/oder in einem Abstand von der Manschette (2) angeordnet ist.

4. Raupenfalle (1), insbesondere für Kiefernprozessionsspinnerraupen, nach Anspruch 3, **dadurch gekennzeichnet, dass** sich das Ende (13) angrenzend an den Stamm über den Boden für den Laufweg (7) hinaus erstreckt, während sich das zweite Ende (14) über die obere Öffnung der Trichtervorrichtung (10) hinaus erstreckt.

5. Raupenfalle (1), insbesondere für Kiefernprozessionsspinnerraupen, nach einem der Ansprüche 1 bis 4, **dadurch gekennzeichnet, dass** sie einen Flansch (15) umfasst, der eine Stützkonsole für mindestens einen Profilabschnitt bildet, der eine Fortsetzung für den Boden für den Laufweg (9) definiert, wobei sich der Flansch (15) von der oberen Öffnung der Trichtervorrichtung (10) aus in Richtung deren unterer Öffnung erstreckt.

6. Raupenfalle (1), insbesondere für Kiefernprozessionsspinnerraupen, nach Anspruch 5, **dadurch gekennzeichnet, dass** die Orientierungselemente (12) auf beiden Seiten einer vertikalen Mittelebene (16) am Flansch (15) symmetrisch befestigt sind.

7. Raupenfalle (1), insbesondere für Kiefernprozessionsspinnerraupen, nach einem der Ansprüche 1 bis 6, **dadurch gekennzeichnet, dass** sie vorzugsweise auf Höhe der Trichtervorrichtung (10) angeordnete Mittel zum Zählen der Raupen umfasst.

8. Trichtervorrichtung (10), die zum Verbinden mit einer Raupenfalle nach einem der Ansprüche 1 bis 7 bestimmt ist, wobei die Trichtervorrichtung **dadurch gekennzeichnet ist, dass** sie einen Flansch (15) umfasst, der eine Stützkonsole mit zwei Profilabschnitten bildet, die dazu bestimmt sind, jeweils ein Ende (9) eines Bodens für den Laufweg (7) der Raupen zu definieren, wobei sich die Stützkonsole von einer oberen Öffnung der Trichtervorrichtung (10) aus in Richtung einer unteren Öffnung symmetrisch auf beiden Seiten einer vertikalen Mittelebene (16) erstreckt und die Trichtervorrichtung (10) ferner Orientierungselemente (12) umfasst, die an dem Flansch (15) auf beiden Seiten der vertikalen Mittelebene (16) symmetrisch befestigt sind..

## Claims

1. Caterpillar trap (1), in particular for pine processionary caterpillars, comprising:
- a profile, forming a path floor (7) for the caterpillars,
- a caterpillar collection bag (11) connected to the path floor (7),
- a collar (2) in the form of a wall which externally delimits the path floor (7), and
- clamping and fastening means (3) for winding and tightening the collar (2) around a tree trunk (6) such that it is spaced apart therefrom by the path floor (7),
- at least one orienting member (12) projecting from the path floor (7), the orienting member (12) being designed to extend between the periphery of the tree trunk (6) and the collar (2) or vice versa, so as to separate the caterpillars from the tree trunk (6) and/or from the collar (2),
**characterized in that** it further comprises a funnel device (10), a lower mouth of which opens into the caterpillar collection bag (11), **and in that** at least one end (9) of the path floor (7) is connected to an upper mouth of this funnel device (10).

2. Caterpillar trap (1), in particular for pine processionary caterpillars, according to claim 1, that the orienting member (12) extends radially or tangentially from the collar (2) and/or from the periphery of the tree trunk (6).

3. Caterpillar trap (1), in particular for pine processionary caterpillars, according to one of claims 1 or 2, **characterized in that** at least one orienting member (12) comprises a fin which extends from a first end (13) adjacent to the trunk (6) or adjacent to the collar (2), to a second end (14) arranged at a distance from the trunk (6) and/or at a distance from the collar (2).

4. Caterpillar trap (1), in particular for pine processionary caterpillars, according to claim 3, **characterized in that** the end (13) adjacent to the trunk extends above the path floor (7), while the second end (14) extends above the upper mouth of the funnel device (10).

5. Caterpillar trap (1), in particular for pine processionary caterpillars, according to one of claims 1 to 4, **characterized in that** it comprises a flange (15) forming a support bracket for at least one profile portion defining a continuity of the path floor (9), the flange (15) extending from the upper mouth of the funnel device (10) toward its lower mouth.

6. Caterpillar trap (1), in particular for pine processionary caterpillars, according to claim 5, **characterized in that** orienting members (12) are fastened to the flange (15) symmetrically on either side of a vertical median plane (16).

7. Caterpillar trap (1), in particular for pine processionary caterpillars, according to one of claims 1 to 6, **characterized in that** it comprises caterpillar counting means preferably arranged at the funnel device (10).

8. Funnel device (10) intended to be associated with a caterpillar trap according to one of claims 1 to 7, the funnel device being **characterized in that** it comprises a flange (15) forming a support bracket for two profile portions for respectively defining one end (9) of a path floor (7) for the caterpillars, the support bracket extending from an upper mouth of the funnel device (10) toward a lower mouth, symmetrically on either side of a vertical median plane (16), the funnel device (10) further comprising orienting members (12) fastened to the flange (15) symmetrically on either side of said vertical median plane (16).
